# FASCICULE DE BREVET EUROPEEN

(11) **EP 2 446 629 B1**
(45) Date de publication et mention de la délivrance du brevet: **01.08.2018**
(21) Numéro de dépôt: 10734283.4
(22) Date de dépôt: 21.06.2010
(51) Int. Cl.: H04N 19/52, H04N 19/147, H04N 19/46

(54) **PROCÉDÉS DE CODAGE ET DE DÉCODAGE D'IMAGES, DISPOSITIFS DE CODAGE ET DE DÉCODAGE, ET PROGRAMME D'ORDINATEUR CORRESPONDANTS**
VERFAHREN ZUR KODIERUNG UND DEKODIERUNG VON BILDERN, ENTSPRECHENDE KODIER- UND DEKODIERVORRICHTUNGEN SOWIE COMPUTERPORGRAMM
METHODS OF CODING AND DECODING IMAGES, CORRESPONDING DEVICES FOR CODING AND DECODING, AND COMPUTER PROGRAM

(30) Priorité: 23.06.2009 FR 0954290
(43) Date de publication de la demande: 02.05.2012
(73) Titulaire: Orange, 75015 Paris (FR)
(72) Inventeur: PATEUX, Stéphane, F-35700 Rennes (FR); CAMMAS, Nathalie, F-35490 Sens De Bretagne (FR); AMONOU, Isabelle, F-35510 Cesson-Sevigne (FR)
(74) Mandataire: Vidon Brevets & Stratégie
(86) Numéro de dépôt international: PCT/FR2010/051248
(87) Numéro de publication internationale: WO 2010/149914

(56) Documents cités:
- WO-A1-2008/117158
- WO-A2-2008/027192
- WO-A2-2009/051719
- JOEL JUNG ET AL: "Competition-Based Scheme for Motion Vector Selection and Coding" JOINT VIDEO TEAM (JVT) OF ISO/IEC MPEG & ITU-T VCEG(ISO/IEC JTC1/SC29/WG11 AND ITU-T SG16 Q6), XX, XX, no. VCEG-AC06r1, 2 août 2006 (2006-08-02), XP030003490 cité dans la demande
- CHEN P ET AL: "Video coding using extended block sizes" 36. VCEG MEETING; 8-10-2008 - 10-10-2008; SAN DIEGO, US; (VIDEO CODING EXPERTS GROUP OF ITU-T SG.16),, 15 octobre 2008 (2008-10-15), XP030003645 cité dans la demande

## Description

### 1. Domaine de l'invention

Le domaine de l'invention est celui du codage et du décodage d'un flux vidéo, constitué d'une série d'images numériques successives. Plus précisément, l'invention s'applique à la compression d'images ou de séquences vidéo utilisant une représentation par blocs de la séquence vidéo et une prédiction de vecteurs mouvement.

L'invention peut notamment, mais non exclusivement, s'appliquer au codage vidéo mis en oeuvre dans les codeurs vidéo actuels et de leurs amendements (MPEG, H.264, H.264 SVC, H.264 MVC, etc) ou à venir (ITU-T/VCEG (H.265) ou ISO/MPEG (HVC), et au décodage correspondant.

### 2. Art antérieur

Les images et séquences d'images numériques occupent beaucoup d'espace en termes de mémoire, ce qui nécessite, lorsqu'on transmet ces images, de les compresser afin d'éviter les problèmes d'encombrements sur le réseau de communication utilisé pour cette transmission, le débit utilisable sur celui-ci étant généralement limité. Cette compression est également souhaitable en vue du stockage de ces données.

On connaît déjà de nombreuses techniques de compression de données vidéo. Parmi celles-ci, de nombreuses techniques de codages vidéo, notamment la technique H.264, utilisent des techniques de prédiction spatiale ou temporelle de groupe de blocs de pixels d'une image courante par rapport à d'autres groupes de blocs de pixels appartenant à la même image ou à une image précédente ou suivante.

Plus précisément, selon la technique H.264, des images I sont codées par prédiction spatiale (prédiction intra), et des images P et B sont codées par prédiction temporelle (prédiction inter) par rapport à d'autres images I, P ou B codées/décodées à l'aide d'une compensation en mouvement.

Ces images sont découpées en blocs, comprenant un ensemble de pixels (par exemple 8x8). Pour chaque bloc est codé un bloc résiduel, encore appelé résidu de prédiction, correspondant au bloc original diminué d'une prédiction. Après ce codage prédictif, les blocs de pixels sont transformés par une transformée de type transformée en cosinus discrète, puis quantifiés. Les coefficients des blocs de pixels quantifiés sont ensuite parcourus dans un ordre de lecture permettant d'exploiter le nombre important de coefficients nuls dans les hautes fréquences, puis codés par un codage entropique.

Selon la technique H.264 par exemple, pour chaque bloc, est codé :
- le type de codage (prédiction intra, prédiction inter, prédiction par défaut réalisant une prédiction pour laquelle aucune information n'est transmise au décodeur (« en anglais « skip »)) ;
- le type de partitionnement ;
- les informations concernant la prédiction (orientation, image de référence, ...) ;
- les informations de mouvement si nécessaire ;
- les coefficients codés ;
- etc.

Le décodage est fait image par image, et pour chaque image, bloc par bloc. Pour chaque bloc, les éléments correspondants du flux sont lus. La quantification inverse et la transformation inverse des coefficients des blocs sont effectuées. Puis, la prédiction du bloc est calculée et le bloc est reconstruit en ajoutant la prédiction au résidu de prédiction décodé.

La norme H.264/MPEG-4 AVC propose ainsi un codage mettant en oeuvre une prédiction de vecteur mouvement définie à partir de la médiane des composantes des vecteurs mouvement des blocs voisins. Par exemple, le vecteur mouvement utilisé sur un bloc codé en mode « inter » est codé à l'aide d'un codage prédictif tel que le suivant :
- dans un premier temps, un vecteur de prédiction pour le vecteur mouvement du bloc considéré est établi. Typiquement, un tel vecteur, appelé prédicteur médian, est défini à partir des valeurs médianes des composantes de blocs voisins déjà codés ;
- dans un deuxième temps, l'erreur de prédiction, c'est-à-dire la différence entre le vecteur mouvement du bloc courant et le vecteur de prédiction précédemment établi, est codée.

Une extension de cette technique de prédiction du vecteur mouvement est proposée par J. Jung et G. Laroche dans le document « Competition-Based Scheme for Motion Vector Selection and Coding », ITU-T VCEG, AC06, July 2006.

Cette technique consiste à mettre en compétition, par exemple, plusieurs prédicteurs, ou vecteurs candidats de prédiction (au-delà du prédicteur médian utilisé par AVC), et à signaler, parmi l'ensemble de vecteurs candidats de prédiction, quel est le vecteur utilisé effectivement.

Ces techniques de codage compressif sont efficaces, mais ne sont pas optimales pour compresser des images présentant des régions de texture homogène. En effet dans la norme H.264/MPEG-4 AVC, la prédiction spatiale d'un bloc dans une image par rapport à un autre bloc dans cette même image n'est possible que si cet autre bloc est un bloc voisin du bloc à prédire et se trouvant dans certaines directions prédéterminées par rapport à celui-ci, c'est-à-dire généralement au-dessus et à gauche, dans un voisinage dit "causal". De même, la prédiction des vecteurs mouvement d'un bloc d'une image est une prédiction causale par rapport aux vecteurs mouvement de blocs voisins. Une technique de codage par bloc de taille élargie est proposée par WO 2009/051719 A2 (THOMSON LICENSING [FR]; DIVORRA ESCODA OSCAR [ES]; YIN PENG [US]) 23 avril 2009 (2009-04-23). Une technique de codage par bloc de taille élargie (ou étendue) est proposée par P. Chen, Y. Ye et M. Karczewicz dans le document « Video coding Using Extended Block Sizes », ITU-T COM16-C123, Janvier 2009, en extension d'un codeur vidéo hybride par bloc (e.g. AVC).

Selon ce document, l'utilisation de bloc de taille élargie permet dans les modes de codage avec compensation de mouvement de limiter le coût de codage des informations de mouvement en proposant le codage d'un vecteur mouvement pour une zone homogène plus élargie qu'un bloc de taille prédéterminée. Par ailleurs, l'utilisation d'un bloc de taille élargie permet d'utiliser une transformation à support élargi à appliquer sur le résidu de compensation en mouvement. Une telle transformation élargie permet également de gagner en compression grâce à un meilleur pouvoir de décorrélation, mais aussi une signalisation efficace pour signaler des résidus nuls. Les blocs de taille élargie sont notamment bénéfiques pour le codage de séquences vidéo de hautes résolutions, et sont classiquement mis en compétition avec les blocs de taille classique.

Ainsi, l'utilisation de tels blocs de taille élargie pour représenter les informations de mouvement permet de gagner en efficacité de compression car seulement un vecteur mouvement est codé pour le bloc de taille élargie et se prête bien aux zones où le mouvement est constant. Le vecteur mouvement est donc supposé constant au sein du bloc de taille élargie. Toutefois, ce mode de mouvement uniforme est limitatif dans le cas de mouvements non constants mais présentant des caractéristiques similaires. Par exemple, cette technique pour une zone de texture uniforme de couleur orange, représentera un mouvement constant sur la zone homogène alors que certains blocs ou sous-blocs, un sous-bloc étant un sous-ensemble d'un bloc de pixels, de cette zone peuvent présenter des disparités de mouvement liés par exemple au maintien d'un tissu.

La solution typiquement proposée pour pallier ce problème met en oeuvre un découpage de bloc de taille élargie en sous-blocs, un sous-bloc étant un sous-ensemble d'un bloc de pixels, et de définir pour chaque sous-bloc un vecteur mouvement. Cependant, cette solution revient à coder autant de vecteur mouvement qu'il y a de sous-blocs dans le bloc de taille élargie et s'avère très coûteuse en termes de signalisation.

Les inventeurs ont donc identifié le besoin d'une nouvelle technique permettant d'obtenir notamment de meilleures performances de codage d'un bloc de taille élargie, tout en limitant le coût de la signalisation, et donc d'offrir une meilleure efficacité de compression tout en assurant une représentation fidèle du mouvement à coder.

### 3. Exposé de l'invention

L'invention propose une solution nouvelle qui ne présente pas l'ensemble de ces inconvénients de l'art antérieur, sous la forme d'un procédé de codage d'un signal d'images, les images étant découpées en sous-blocs de pixels, comprenant une étape de regroupement d'au moins deux sous-blocs en au moins un bloc de taille élargie, lorsque les sous-blocs respectent au moins un critère de regroupement prédéterminé.

Selon l'invention, un tel procédé met en oeuvre les étapes suivantes, pour au moins un groupe une étape de prédiction appliquant au moins un mode de prédiction de mouvement utilisant au moins deux vecteurs de prédiction de mouvement distincts, pour au moins un bloc de taille élargie, les vecteurs de prédiction de mouvement étant associés respectivement à des sous-ensembles dudit bloc de taille élargie, comprenant au moins un desdits sous-blocs dudit bloc de taille élargie, les sous-ensembles étant prédéfinis et distincts.

Pour rappel, on considère qu'un bloc de taille élargie regroupe des sous-blocs respectant au moins un critère de regroupement prédéterminé. De façon générale, le critère de regroupement utilisé pour la formation de bloc de taille élargie vise à augmenter l'efficacité de représentation.

Par exemple, le critère de regroupement considéré peut être basé sur une similitude entre vecteur couleur, en d'autres termes, si la différence entre quatre vecteurs couleur caractérisant quatre sous-blocs distincts, est inférieure à un seuil prédéterminé, ces quatre vecteurs couleur sont considérés comme similaires, et les quatre sous-blocs caractérisés par ces paramètres peuvent être regroupés en un bloc de taille élargie.

D'autres mode de réalisation de l'invention peuvent prendre en compte un critère de regroupement basé sur la luminance, la texture, une information de mouvement et/ou encore un regroupement de sous-bloc maximisant le rapport débit/distorsion...

Ainsi, l'invention repose sur une approche nouvelle et inventive du codage de signal d'images, et plus particulièrement du codage prédictif de vecteurs de prédiction de mouvement, permettant d'adapter et d'optimiser la prédiction de mouvement à l'intérieur d'au moins un bloc de taille élargie, grâce à l'utilisation d'au moins un mode de prédiction de mouvement utilisant au moins deux vecteurs de prédiction de mouvement distincts, tout en offrant une bonne efficacité de compression, selon une méthode implémentée dans un émetteur et reproductible par au moins un récepteur.

En effet, l'invention est basée sur l'utilisation pour au moins un bloc de taille élargie d'un mode de prédiction de mouvement utilisant deux vecteurs prédiction de mouvement distincts associés respectivement à au moins deux sous-blocs du bloc de taille élargie. Cette technique offre ainsi la possibilité de disposer d'un deuxième vecteur de prédiction de mouvement pour au moins un sous-bloc du bloc de taille élargie. Cette possibilité permet d'enrichir la représentation du mouvement à coder, tout en limitant le coût de sa signalisation (un seul mode à signaler pour tout le bloc de taille élargie).

Selon un mode de réalisation particulier, l'étape de prédiction met en oeuvre, pour au moins un bloc de taille élargie, une mise en compétition d'au moins deux modes de prédiction de mouvement, sélectionnant un des modes de prédiction de mouvement, dit mode de prédiction de mouvement sélectionné, selon un critère de sélection prédéterminé.

Ainsi, l'invention permet de faire un choix optimisé du mode de prédiction de mouvement par mise en compétition de plusieurs modes de prédiction, pour au moins un bloc de taille élargie. On obtient alors un mode de prédiction de mouvement plus adapté à décrire le mouvement de l'ensemble des sous-blocs qui constituent le bloc de taille élargie.

En d'autres termes, le mode de prédiction de mouvement sélectionné permet la prédiction des sous-blocs du bloc de taille élargie suivant au moins deux vecteurs de prédiction de mouvement distincts. La technique selon l'invention permet ainsi d'enrichir et de nuancer la palette de mouvements possibles, sans augmenter fortement le coût de signalisation.

La sélection du mode de prédiction de mouvement optimisé est par exemple effectuée selon un critère de sélection maximisant un rapport entre le débit (le nombre de bits transmis par seconde) et la distorsion (différence entre le signal transmis et le signal reçu due au canal de transmission).

Selon un mode de réalisation particulier, la mise en compétition est appliquée à un ensemble de modes de prédiction de mouvement disponibles, et sélectionne, comme mode de prédiction de mouvement sélectionné, le meilleur des modes de prédiction de mouvement selon le critère de sélection.

Ainsi le procédé de codage selon l'invention permet de déterminer le meilleur mode de prédiction de mouvement d'un bloc de taille élargie, sélectionné parmi un ensemble de modes de prédiction de mouvement disponibles. Ce mode de prédiction de mouvement permet alors d'obtenir le meilleur résultat de prédiction possible, ce qui permet d'améliorer la qualité de codage de l'image.

Par ailleurs, selon une variante de ce mode de réalisation particulier, la mise en compétition est interrompue dès que le critère prédéterminé est atteint, par exemple, dès qu'un mode de prédiction de mouvement testé lors de l'étape de mise en compétition atteint une valeur acceptable du critère de sélection maximisant un rapport entre le débit et la distorsion. Cette variante de réalisation permet de limiter le temps de traitement de la mise en compétition, rendant ainsi le codage plus rapide, mais au léger détriment de la qualité de codage.

Selon une caractéristique particulière de l'invention, le procédé de codage met en oeuvre pour au moins un bloc de taille élargie, une étape d'insertion, dans le signal d'images, d'une information d'identification du mode de prédiction de mouvement sélectionné.

Un tel signal d'images indiquera au décodeur, pour un bloc de taille élargie, le mode de prédiction de mouvement sélectionné auquel il est associé.
Selon un mode de réalisation de l'invention, le mode de prédiction de mouvement appartient au groupe comprenant les modes de prédiction suivants :
- un mode dit « left mode », associant à un sous-bloc dudit bloc de taille élargie, un vecteur de prédiction de mouvement correspondant au vecteur mouvement utilisé pour le sous-bloc situé en dehors à gauche du bloc de taille élargie et sur la même ligne que le sous-bloc considéré ;
- un mode dit « top mode », associant à un sous-bloc dudit bloc de taille élargie, un vecteur de prédiction de mouvement correspondant au vecteur mouvement utilisé pour le sous-bloc situé en dehors au-dessus du bloc de taille élargie et sur la même colonne que le sous-bloc considéré ;
- un mode dit « diag mode », associant à un sous-bloc dudit bloc de taille élargie, un vecteur de prédiction de mouvement correspondant au vecteur mouvement utilisé pour le sous-bloc situé sur la même diagonale que le sous-bloc considéré et en dehors, au-dessus et à gauche du bloc de taille élargie ;
- un mode dit « left récursif mode », associant à un sous-bloc dudit bloc de taille élargie, un vecteur de prédiction de mouvement correspondant au vecteur mouvement utilisé pour le sous-bloc déjà codé, situé directement à gauche sur la même ligne que le sous-bloc considéré ;
- un mode dit « diag mode pondéré », associant à un sous-bloc dudit bloc de taille élargie, un vecteur de prédiction de mouvement correspondant à un vecteur mouvement résultant d'une pondération effectuée entre le vecteur mouvement utilisé pour le sous-bloc situé sur la même diagonale que le sous-bloc considéré et en dehors, au-dessous et à gauche du bloc de taille élargie, et le vecteur mouvement utilisé pour le sous-bloc situé sur la même diagonale que le sous-bloc considéré et en dehors, au-dessus et à droite du bloc de taille élargie ;
- une combinaison (ou « dérivation ») d'au moins deux des modes de prédiction précédemment listés, par exemple de la même manière que l'on peut utiliser un mode de prédiction de mouvement « left récursif » on peut considérer un mode « top récursif ».

Ainsi, l'invention propose pour au moins un bloc de taille élargie d'effectuer la mise en compétition de l'ensemble des modes de prédiction de mouvement précédemment cités, et de sélectionner le mode de prédiction de mouvement le plus efficace pour la prédiction des sous-blocs qui constituent le bloc de taille élargie considéré. Si, par exemple, le mode de prédiction de mouvement sélectionné correspond au mode de prédiction de mouvement « left mode » et que le bloc de taille élargie est de taille carrée de 32x32 sous-blocs, chaque sous-bloc sera associé à un vecteur de prédiction correspondant au vecteur mouvement utilisé pour le sous-bloc situé en dehors à gauche du bloc de taille élargie et sur la même ligne que le sous bloc considérés. Grâce à l'affectation de ce mode de prédiction de mouvement, le bloc de taille élargie considéré va coder trente-deux sous-ensembles (correspondant aux lignes) de trente-deux sous-blocs, chacun de ces sous-ensembles étant associés à trente-deux vecteurs de prédiction de mouvement pouvant être distincts ou non.

Selon un autre aspect de l'invention, le mode de prédiction de mouvement appartient au groupe comprenant également au moins un des modes de prédiction suivants :
- un mode dit « DC left », associant à tous les sous-blocs du bloc de taille élargie, le vecteur de prédiction de mouvement représentatif d'au moins un vecteur mouvement utilisé pour au moins un sous-bloc situé directement à gauche en dehors du bloc de taille élargie ;
- un mode dit « DC top », associant à tous les sous-blocs du bloc de taille élargie, le vecteur de prédiction de mouvement représentatif d'au moins un vecteur mouvement utilisé pour au moins un sous-bloc situé directement au-dessus en dehors du premier sous-bloc du bloc de taille élargie.

Ainsi, l'invention permet également de mettre en compétition des modes de prédiction classiques tels que « DC left » et « DC top » avec les nouveaux modes de prédiction précédemment cités. En effet, les nouveaux modes de prédiction « left mode », « top mode », et « diag mode » par exemple, utilisent au moins deux vecteurs de prédiction de mouvement, tandis que les modes classiques « DC left » et « DC top » utilisent un unique vecteur de prédiction de mouvement.

Selon un mode de réalisation particulier de l'invention, on associe à tous les sous-blocs du bloc de taille élargie :
- le vecteur de prédiction de mouvement correspondant au vecteur mouvement utilisé pour le premier sous-bloc en dehors du bloc de taille élargie directement situé à gauche du premier sous-bloc du bloc de taille élargie, pour un mode dit « DC left », ou
- le vecteur de prédiction de mouvement correspondant au vecteur mouvement utilisé pour le premier sous-bloc en dehors du bloc de taille élargie directement situé au-dessus du premier sous-bloc du bloc de taille élargie, pour un mode dit « DC top ».

Selon un autre mode de réalisation, on associe à tous les sous-blocs du bloc de taille élargie :
- une combinaison des vecteurs de prédiction de mouvement correspondant aux vecteurs mouvement utilisés pour la colonne de sous-blocs en dehors du bloc de taille élargie directement située à gauche du bloc de taille élargie, , pour un mode dit « DC left », ou
- une combinaison des vecteurs de prédiction de mouvement correspondants aux vecteurs mouvement utilisés pour la ligne de sous-blocs en dehors du bloc de taille élargie située au-dessus du bloc de taille élargie, pour un mode dit « DC top ».

Selon une caractéristique particulière de l'invention, le procédé de codage comprend une étape de détermination d'une différence, dite résidu, entre un vecteur mouvement d'au moins un desdits sous-blocs et un vecteur de prédiction de mouvement qui lui est associé.

Par exemple, un résidu nul indique une prédiction parfaite. La cartographie de ces résidus pour le bloc de taille élargie peut également être considérée comme un critère de sélection du meilleur mode de prédiction de mouvement. Par exemple, pour un mode de prédiction de mouvement mis en compétition, on établit la valeur médiane pour l'ensemble des sous-blocs qui constituent le bloc de taille élargie. Une fois que l'on a obtenu l'ensemble des valeurs médianes déterminées pour chaque mode de prédiction de mouvement mis en compétition, la valeur médiane la plus faible indique une bonne prédiction et permet la sélection du mode de prédiction de mouvement auquel elle est associée. Ainsi un mode de réalisation de l'invention peut utiliser une mise en compétition de mode de prédiction de mouvement mettant en oeuvre un calcul de résidu de chaque sous-bloc du bloc de taille élargie afin de sélectionner un mode de prédiction de mouvement minimisant la valeur des résidus obtenus.

Par ailleurs, un tel procédé de codage met en oeuvre une technique de regroupement de codage des résidus de vecteurs mouvement des sous-blocs dudit bloc de taille élargie et met également en oeuvre une signalisation appartenant au groupe comprenant les signalisations de type:
- « arbre de zéros » dans lequel la valeur de chaque branche représentant les résidus est proche de zéro « zerotree » ;
- « par plage » consistant à coder des séries de résidus consécutifs de même valeur ;
- etc.

Un « arbre de zéros » consiste à utiliser un arbre de regroupement hiérarchique des sous-blocs constituant le bloc de taille élargie, et à indiquer au niveau des branches si les « fils » de la branche considéré ont tous un résidu nul ou non. En d'autres termes, un tel arbre met en oeuvre un regroupement récursif d'ensemble de sous-blocs.

Un autre aspect de l'invention concerne un programme d'ordinateur comportant des instructions pour la mise en oeuvre du procédé de codage selon tel que décrit ci-dessus, lorsque le programme est exécuté par un processeur.

On note en effet que le procédé de codage selon l'invention peut être mis en oeuvre de diverses manières, notamment sous forme câblée et/ou sous forme logicielle.

Dans un autre mode de réalisation, l'invention concerne un dispositif de codage d'un signal d'images, les images étant découpées en sous-blocs de pixels, comprenant des moyens de regroupement d'au moins deux sous-blocs en au moins un bloc de taille élargie, lorsque lesdits sous-blocs respectent au moins un critère de regroupement prédéterminé.

Selon l'invention, un tel dispositif de codage comprend des moyens de prédiction appliquant au moins un mode de prédiction de mouvement utilisant au moins deux vecteurs de prédiction de mouvement distincts, pour au moins un bloc de taille élargie, les vecteurs de prédiction de mouvement étant associés respectivement à des sous-ensembles dudit bloc de taille élargie, comprenant au moins un desdits sous-blocs dudit bloc de taille élargie, lesdits sous-ensembles étant prédéfinis et distincts.

Un tel dispositif de codage est notamment adapté à mettre en oeuvre le procédé de codage décrit précédemment. Il s'agit par exemple d'un codeur vidéo de type MPEG ou H.264, ou selon une future norme de compression.

Ce dispositif pourra bien sûr comporter les différentes caractéristiques relatives au procédé de codage selon l'invention.

Un autre aspect de l'invention concerne un procédé de décodage d'un signal d'images, les images étant découpées en sous-blocs de pixels, comprenant une étape de regroupement d'au moins deux sous-blocs en au moins un bloc de taille élargie, lorsque lesdits sous-blocs respectent au moins un critère de regroupement prédéterminé.

Selon l'invention, un tel procédé met en oeuvre une étape de prédiction appliquant au moins un mode de prédiction de mouvement utilisant au moins deux vecteurs de prédiction de mouvement distincts, pour au moins un bloc de taille élargie, les vecteurs de prédiction de mouvement étant associés respectivement à des sous-ensembles dudit bloc de taille élargie, comprenant au moins un desdits sous-blocs dudit bloc de taille élargie, lesdits sous-ensembles étant prédéfinis et distincts.

Selon un mode de réalisation particulier, l'étape de prédiction met en oeuvre une étape de décodage d'une information d'identification dudit mode de prédiction de mouvement sélectionné, insérée par le codage dans ledit signal d'images.

De cette façon, la technique de décodage selon l'invention permet, après réception et lecture des informations de codage, et plus particulièrement d'une information d'identification, de déterminer le mode de prédiction de mouvement sélectionné au codage correspondant au bloc de taille élargie en cours de décodage, parmi un ensemble de modes de prédiction de mouvement connus du codeur et du décodeur.

Un autre aspect de l'invention concerne un programme d'ordinateur comportant des instructions pour la mise en oeuvre du procédé de décodage tel que décrit ci-dessus, lorsque ledit programme est exécuté par un processeur.

On note en effet que le procédé de décodage selon l'invention peut être mis en oeuvre de diverses manières, notamment sous forme câblée et/ou sous forme logicielle.

Dans un autre mode de réalisation, l'invention concerne un dispositif de décodage d'un signal d'images, lesdites images étant découpées en sous-blocs de pixels, comprenant des moyens de regroupement de sous-blocs en au moins un bloc de taille élargie, lorsque les sous-blocs respectent au moins un critère de regroupement prédéterminé.

Selon l'invention, un tel dispositif comprend des moyens de prédiction appliquant au moins un mode de prédiction de mouvement utilisant au moins deux vecteurs de prédiction de mouvement distincts, pour au moins un bloc de taille élargie, les vecteurs de prédiction de mouvement étant associés respectivement à des sous-ensembles dudit bloc de taille élargie, lesdits sous-ensembles étant prédéfinis et distincts, et comprenant au moins un desdits sous-blocs.

Un tel dispositif de décodage est notamment adapté à mettre en oeuvre le procédé de décodage décrit précédemment. Il s'agit par exemple d'un décodeur vidéo de type MPEG ou H.264, ou selon une future norme de compression vidéo.

Ce dispositif de décodage pourra bien sûr comporter les différentes caractéristiques relatives au procédé de décodage selon l'invention.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 présente les principales étapes du procédé de codage ;
- les figures 2A à 2G présentent différents mode de prédiction de mouvement ;
- la figure 3 illustre les principales étapes du procédé de décodage ;
- les figures 4 et 5 présentent respectivement la structure d'un dispositif de codage et d'un dispositif de décodage selon un mode de réalisation particulier de l'invention.

### 5. Description d'un mode de réalisation de l'invention

### 5.1 Principe général

Le principe général de l'invention repose sur la construction de bloc de taille élargie au sein d'au moins une image. De tels blocs de taille élargie sont construits par regroupement de sous-blocs présentant un critère de regroupement prédéterminé. Par exemple, si la différence entre deux vecteurs couleurs associés à deux sous-blocs distincts, est inférieure à un seuil prédéterminé, ces deux sous-blocs peuvent être regroupés sur la base de leur vecteur couleur similaires. On pourrait également considérer un regroupement selon un critère lié à la luminance, une information de mouvement et/ou encore un regroupement de sous-bloc maximisant le rapport débit/distorsion... De façon générale, un bloc de taille élargie est créé pour des raisons d'efficacité de représentation.

La technique selon l'invention permet de mettre en oeuvre, pour au moins un bloc de taille élargie, un mode de prédiction de mouvement utilisant au moins deux vecteurs prédiction de mouvement distincts. Ces deux vecteurs seront utilisés sélectivement, comme référence, notamment pour la détermination des résidus, comme précisé par la suite.

Ainsi on appelle « mode de prédiction de mouvement » la règle qui établit à partir du ou desquels sous-bloc(s) on obtient le vecteur de prédiction de mouvement, associé par la suite à au moins un sous-bloc du bloc de taille élargie.

Selon le procédé de codage de l'invention, une mise en compétition est appliquée à un ensemble de modes de prédiction de mouvement disponibles, pour au moins un bloc de taille élargie. A l'issue de cette mise en compétition, on obtient un mode de prédiction de mouvement sélectionné pour le bloc de taille élargie précédemment considéré.

La technique selon l'invention permet également, d'insérer dans ledit signal d'images, une information d'identification du mode de prédiction de mouvement sélectionné pour au moins un bloc de taille élargie.

### 5.2 Description de modes de réalisation du procédé de codage

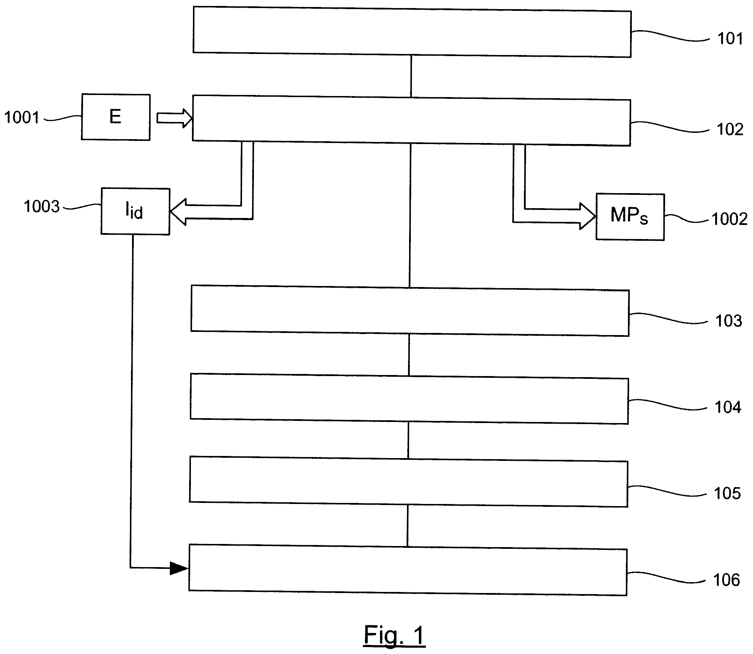

Selon un mode de réalisation de l'invention et comme illustré en figure 1, pour un signal d'images, les images étant découpées en sous-blocs de pixels, une première étape 101 de regroupements de sous-blocs en bloc de taille élargie est mise en oeuvre selon une technique connue (décrite par exemple dans le document « Video coding Using Extended Block Sizes », ITU-T COM16-C123, Janvier 2009 de P. Chen, Y. Ye et M. Karczewicz, déjà mentionné en relation avec l'art antérieur).

Ainsi, un bloc de taille élargie correspond au regroupement d'un ensemble de blocs ou de sous-blocs de pixels, un sous-bloc étant un sous-ensemble d'un bloc de pixels. Par exemple, un sous-bloc est un bloc de 8x8 pixels et un bloc élargi regroupe 4x4=16 sous-blocs de pixels. Ce regroupement est effectué en fonction d'un critère de regroupement prédéterminé. Par exemple, si la différence entre deux vecteurs couleur ou encore une information de luminance, associés à deux sous-blocs distincts, est inférieure à un seuil prédéterminé, ces deux sous-blocs peuvent être regroupés sur la base de leur vecteur couleur similaires. On pourrait également considérer un autre mode de réalisation mettant en oeuvre un critère de regroupement visant à regrouper des sous-blocs maximisant le rapport débit/distorsion... L'avantage du codage des informations associées à ce bloc de taille élargie, est qu'il permet de:
- mutualiser des informations sur tout le bloc de taille élargie (par exemple même vecteur mouvement, même image de référence utilisée, ...), pour l'ensemble des sous-blocs qui le constituent,
- coder également des informations par sous-blocs pixels (ou groupement de sous-blocs de pixels), par exemple, la différence, dite résidu, entre un vecteur mouvement d'au moins un desdits sous-blocs et un vecteur de prédiction de mouvement qui lui est associé, codé par ensemble de 8x8, 16x16, 32x32 sous-blocs ou autre).

Une fois ce regroupement 101 de sous-blocs en au moins un bloc de taille élargie effectué, des modes de prédiction de mouvement, appartenant à un ensemble E (1001) de modes de prédiction de mouvement du bloc de taille élargie disponibles, sont mis en compétition 102.

La technique de mise en compétition est connue et décrite par exemple dans le document « Competition-Based Scheme for Motion Vector Selection and Coding », ITU-T VCEG, AC06, July 2006 de J. Jung et G. Laroche, également déjà mentionné en relation avec l'art antérieur),

Selon un critère de sélection prédéterminé mis en oeuvre par la mise en compétition, par exemple un critère d'optimisation du rapport entre le débit et la distorsion, on sélectionne ainsi un mode de prédiction de mouvement, dit mode de prédiction de mouvement sélectionné MPs (1002) adapté au bloc de taille élargie.

L'ensemble E (1001) comprend plusieurs modes de prédiction de mouvement de différent types. D'une part, l'ensemble E comprend les modes de prédiction de mouvement classiques, à savoir « DC left » et « DC top » utilisant un unique vecteur mouvement pour la prédiction de l'ensemble des sous-blocs du bloc de taille élargie considéré. D'autres part, l'ensemble E comprend également, de manière non limitative, des modes de prédiction de mouvement « moins classiques » parmi les modes « left mode », « top mode », « diag mode », « left récursif mode », « diag mode pondéré » ou une combinaison d'au moins deux de ces modes, mettant en oeuvre au moins deux vecteurs prédiction de mouvement distincts associés à des sous-ensembles de sous-blocs distincts du bloc de taille élargie.

Par exemple, le mode « left mode » consiste à associer à un sous-bloc du bloc de taille élargie, un vecteur de prédiction de mouvement correspondant au vecteur mouvement utilisé pour le sous-bloc situé en dehors à gauche du bloc de taille élargie et sur la même ligne que ledit sous-bloc considéré.

Le mode dit « left récursif mode », associe, quant à lui, à un sous-bloc du bloc de taille élargie, un vecteur de prédiction de mouvement correspondant au vecteur mouvement utilisé pour le sous-bloc déjà codé, situé directement à gauche sur la même ligne que le sous-bloc considéré.

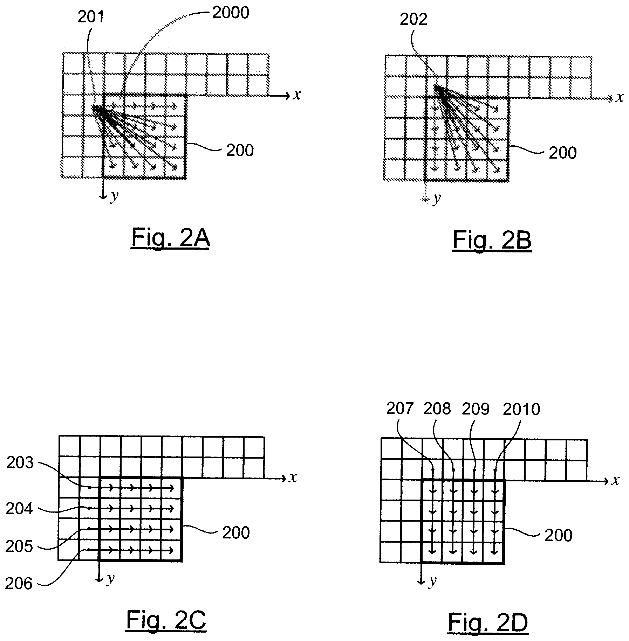

L'ensemble de ces modes moins classiques sont chacun décrits plus en détail par la suite en relation avec les figures 2A à 2G.

Selon un mode de réalisation, on peut considérer que la mise en compétition est interrompue dès qu'une valeur acceptable du critère de sélection prédéterminée est obtenue.

Par exemple dès que l'énergie des résidus des vecteurs mouvement obtenus par un estimateur de mouvement (dispositif d'établissement des vecteurs mouvement utilisés au niveau du codeur) est inférieure à un seuil prédéterminé, le mode de prédiction de mouvement respectant ce critère est sélectionné.

Plus précisément, pour un bloc de taille élargie contenant 8x8 sous-blocs, on peut considérer un critère de sélection du mode de prédiction de mouvement tel que la somme des normes de ces résidus soit inférieure à 10, cette somme étant exprimée en « sous-pixels ». De manière générale, la position sous-pixellique d'un pixel (encore appelé point) est décomposée en la position du pixel inférieur le plus proche dans le niveau de résolution inférieur et par le décalage par rapport à ce pixel exprimé en intervalle, ou distance, sous-pixellique. Par exemple, à une précision au 16^{ème} de pixel, seize intervalles sous-pixelliques sont possibles correspondant à quinze positions sous-pixelliques entre deux positions pixelliques entières.

Ce mode de réalisation présente l'avantage d'une rapidité de traitement, cependant celle-ci est obtenue au détriment d'une meilleure performance en termes de débit/distorsion qui aurait pu être obtenue au moyen d'un mode de prédiction de mouvement disponible n'ayant pas encore été mis en compétition.

Selon un autre mode de réalisation, l'étape de mise en compétition 102 teste l'ensemble des modes de prédiction disponibles et sélectionne le meilleur mode de prédiction de mouvement selon le critère de sélection prédéterminé.

Par ailleurs, la sélection d'un mode de prédiction de mouvement adapté au bloc de taille élargie délivre une information d'identification Iid (1003) de ce mode de prédiction de mouvement.

Puis, le procédé de codage met en oeuvre une étape de prédiction 103 du bloc de taille élargie considéré, utilisant le mode de prédiction de mouvement précédemment obtenu. Selon le mode de réalisation ici représenté, l'étape de prédiction peut délivrer pour chaque sous-bloc du bloc de taille élargie considéré un résidu de prédiction.

On rappelle que par « résidu » on entend un sous-bloc original diminué de sa prédiction. Par exemple dans le cas d'une prédiction de mouvement, on appelle résidu la différence entre un vecteur mouvement d'au moins un desdits sous-blocs et un vecteur de prédiction de mouvement qui lui est associé. Un résidu nul correspond alors à une prédiction parfaite.

Par la suite le vecteur mouvement final associé au sous-bloc du bloc de taille élargie considéré correspond alors au vecteur de prédiction de mouvement défini par le mode de prédiction de mouvement précédemment sélectionné, auquel on additionne le résidu de vecteur mouvement obtenu pour ce sous-bloc.

Ainsi si un résidu est non nul pour un sous-bloc, les modes de prédiction « left mode » et « left récursif mode » définis précédemment ne conduisent pas au même champ de mouvement au final.

Par ailleurs, le mode de réalisation selon l'invention, met en oeuvre une étape 104 de regroupement des résidus de vecteurs mouvement à coder pour les sous-blocs d'un bloc de taille élargie. Cette étape consiste à regrouper le codage des résidus des sous-blocs présentant des résidus de valeurs similaires, en d'autres termes ayant une valeur proche.

Par exemple, une signalisation de ce regroupement de type « zerotree » peut être utilisée afin de définir sur quels sous-blocs le résidu de mouvement est nul ou non.

Puis le procédé met en oeuvre une étape de codage par compensation en mouvement 105 du bloc de taille élargie. Il est à noter que, bien qu'un bloc de taille élargie soit défini, la compensation en mouvement est effectuée de façon séparée pour chaque sous-bloc du fait que ces sous-blocs n'ont pas forcément tous le même mouvement comme on l'a vu précédemment.

Suite à la compensation en mouvement, le résidu de texture (valeurs de luminances/chrominance à ajouter sur les valeurs de prédictions du bloc considéré afin d'obtenir le bloc reconstruit) peut également être codé indifféremment sous-bloc par sous-bloc à l'aide d'une transformation classique (i.e. DCT, transformation de Hadamard, ...) sur ces blocs, ou bien à l'aide d'une transformation de taille élargie (i.e. transformation sur des blocs de taille élargie par rapport à des blocs de tailles classiques 4x4, 8x8, 16x16 (on peut ici avoir des transfos de type DCT, Hadamard, ....) sur le bloc de taille élargie (ou de blocs de taille intermédiaire).

Par ailleurs, le procédé de codage selon l'invention met en oeuvre une étape d'insertion 106 de l'information d'identification Iid 1003 permettant d'identifier le mode de prédiction de mouvement sélectionné MPs 1002.

On présente en relation avec les figures 2A à 2G, le fonctionnement respectif des mode de prédiction de mouvement classiques « DC left », « DC top », « left mode », « top mode », « diag mode », « diag mode pondéré » et « left récursif mode ».

Pour des raisons de clarté, on représente pour l'ensemble des figures 2A à 2G un sous-bloc par ses coordonnées (x,y). Un sous-bloc de coordonnées (x,y) correspond au x-ème sous-bloc horizontal de la y-ème ligne de sous-bloc dans le bloc de taille élargie. Le sous-bloc (0,0) correspond au premier sous-bloc 2000 situé en haut à gauche dans le bloc de taille élargie 200 comprenant 4x4 sous-blocs de pixels. Ainsi selon cette convention de représentation, le sous-bloc (-1,0) correspond, par exemple, au sous-bloc 201 de la figure 2A situé directement en haut à gauche du bloc de taille élargie. De plus, le point de départ des flèches représentées sur ces figures définit à partir de quels sous-blocs on attribue le vecteur mouvement (vecteur de prédiction de mouvement + résidu) comme le vecteur de prédiction de mouvement du sous-bloc du bloc de taille élargi à coder désigné par le point d'arrivée de la flèche correspondante.

On considère la figure 2A représentant le mode de prédiction de mouvement classique « DC left ». Selon ce mode de prédiction de mouvement, le vecteur de prédiction de mouvement de tous les sous-blocs du bloc de taille élargie correspond au vecteur mouvement utilisé pour le sous-bloc (-1,0) 201 situé à gauche du bloc de taille élargie 200 considéré.

Selon un mode de réalisation, non représenté, on peut également attribuer à l'ensemble des sous-blocs du bloc de taille élargie un vecteur de prédiction de mouvement correspondant au vecteur médian d'un ensemble de sous-bloc situés à gauche du bloc de taille élargie, par exemple les sous-blocs (-1,0), (-1,1), (-1,2), (-1,3). Comme on le constate, ce mode de prédiction de mouvement classique associe un même vecteur de prédiction de mouvement à tous les sous-blocs au sein du bloc de taille élargie et fait partie de l'état de l'art actuel.

En relation avec la figure 2B on considère le mode de prédiction de mouvement « DC top ». Selon ce mode de prédiction de mouvement classique, le vecteur de prédiction de mouvement de tous les sous-blocs du bloc de taille élargie correspond au vecteur mouvement utilisé pour le sous-bloc (0,-1) 202 situé au-dessus du bloc de taille élargie 200 considéré.

De même que pour le mode de prédiction de mouvement « DC left », un variante du mode de réalisation existe et est non représentée mettant en oeuvre l'attribution à l'ensemble des sous-blocs du bloc de taille élargie d'un vecteur de prédiction de mouvement correspondant au vecteur médian d'un ensemble de sous-bloc situés au-dessus du bloc de taille élargie, par exemple les sous-blocs (0,-1), (1,-1), (2,-1), (3,-1).

En relation avec la figure 2C, on décrit ci-après un nouveau mode, dit « left mode », de prédiction de mouvement. Ce mode « left mode », associe à un sous-bloc dudit bloc de taille élargie, un vecteur de prédiction de mouvement correspondant au vecteur mouvement utilisé pour le sous-bloc situé en dehors à gauche du bloc de taille élargie et sur la même ligne que ledit sous-bloc considéré. Ainsi, en relation avec la figure 2C, le vecteur de prédiction de mouvement des sous-blocs (0,0), (1,0), (2,0) et (3,0) correspond au vecteur mouvement du sous-bloc (-1,0) référencé 203.

De même, le vecteur de prédiction de mouvement des sous-blocs de la deuxième ligne (comprenant les sous-blocs (0,1), (1,1), (2,1) et (3,1)), la troisième ligne (comprenant les sous-blocs (0,2), (1,2), (2,2) et (3,2)), et de la quatrième ligne (comprenant les sous-blocs (0,3), (1,3), (2,3) et (3,3)) du bloc de taille élargie correspond respectivement au vecteur mouvement des blocs (-1,1), (-1,2), (-1,3) référencés respectivement 204, 205, 206 sur la figure 2C.

On constate que le mode de prédiction de mouvement « left mode », utilise, dans le cas représenté sur la figure 2C, quatre vecteurs de prédiction de mouvement qui peuvent être distinct ou non, permettant ainsi de décrire un mouvement non uniforme au sein du bloc de taille élargie.

En relation avec la figure 2D, on décrit ci-après un deuxième nouveau mode, dit « top mode », de prédiction de mouvement. Ce mode « top mode », associe à un sous-bloc dudit bloc de taille élargie, un vecteur de prédiction de mouvement correspondant au vecteur mouvement utilisé pour le sous-bloc situé en dehors au-dessus du bloc de taille élargie et sur la même ligne que ledit sous-bloc considéré.

Ainsi, en relation avec la figure 2D, le vecteur de prédiction de mouvement des sous-blocs (0,0), (0,1), (0,2) et (0,3) correspond au vecteur mouvement du sous-bloc (0,-1) référencé 207. De même, le vecteur de prédiction de mouvement des sous-blocs de la deuxième colonne (comprenant les sous-blocs (1,0), (1,1), (1,2) et (1,3)), la troisième colonne (comprenant les sous-blocs (2,0), (2,1), (2,2) et (2,3)), et de la quatrième colonne (comprenant les sous-blocs (3,0), (3,1), (3,2) et (3,3)) du bloc de taille élargie correspond respectivement au vecteur mouvement des blocs (1,-1), (2,-1), (3,-1) référencés respectivement 208, 209, 210 sur la figure 2D.

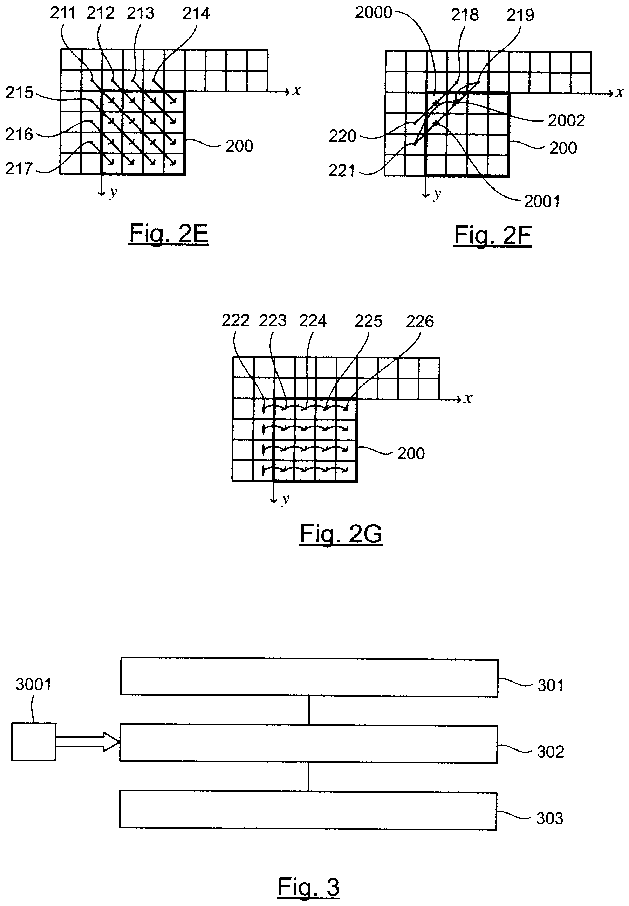

En relation avec la figure 2E, on décrit ci-après un troisième nouveau mode, dit « diag mode », de prédiction de mouvement. Ce mode « diag mode », associe à un sous-bloc dudit bloc de taille élargie, un vecteur de prédiction de mouvement correspondant au vecteur mouvement utilisé pour le sous-bloc situé sur la même diagonale que le sous-bloc considéré et en dehors du bloc de taille élargie et en dehors, au-dessus et à gauche du bloc de taille élargie.

Ainsi, en relation avec la figure 2E, le vecteur de prédiction de mouvement des sous-blocs (0,0), (1,1), (2,2) et (3,3) correspond au vecteur mouvement du sous-bloc (-1,1) référencé 211. De même, le vecteur de prédiction de mouvement des sous-blocs de la diagonale comprenant les sous-blocs (0,1), (1,2), (2,3), la diagonale comprenant les sous-blocs (0,2) et (1,3), la diagonale comprenant le sous-bloc (0,3), la diagonale comprenant les sous-blocs (1,0), (2,1), (3,2), la diagonale comprenant les sous-blocs (2,0) et (3,1), la diagonale comprenant le sous-bloc (3,0) du bloc de taille élargie correspond respectivement au vecteur mouvement des blocs (-1,0), (-1,1), (-1,2), (0,-1), (1,-1), (2,-1) référencés respectivement 215, 216, 217, 212, 213, 214.

En relation avec la figure 2F, on décrit ci-après un quatrième nouveau mode, dit « diag mode pondéré», de prédiction de mouvement. Ce mode « diag mode pondéré », associe à un sous-bloc dudit bloc de taille élargie, un vecteur de prédiction de mouvement correspondant au vecteur mouvement résultant d'une pondération effectuée entre le vecteur mouvement du sous-bloc situé sur la même diagonale que ledit sous-bloc considéré et en dehors, au-dessous et à gauche du bloc de taille élargie, et le vecteur mouvement utilisé pour le sous-bloc situé sur la même diagonale que ledit sous-bloc considéré et en dehors, au-dessus et à droite du bloc de taille élargie.

Ainsi, en relation avec la figure 2F, le vecteur de prédiction de mouvement du sous-blocs (0,0) référencé 2000 correspond à la pondération effectuée entre le vecteur mouvement du sous-bloc (-1,1) référencé 220 et le vecteur mouvement du sous-bloc (1,-1) référencé 218. De même, le vecteur de prédiction de mouvement des sous-blocs (0,1) et (1,0) respectivement référencés 2001 et 2002 correspond à la pondération effectuée entre le vecteur mouvement du sous-bloc (-1,2) référencé 221 et le vecteur mouvement du sous-bloc (2,-1) référencé 219.

La règle de pondération selon ce mode de réalisation peut être représentée par les équations suivantes pour un bloc (x,y) :
▪ si x+y<X, alors la valeur V du vecteur de prédiction de mouvement est telle que V=[(y+1)*U+(x+1)*W]/(x+y+2) avec :
   ∘ X correspondant à la taille d'un sous-bloc, parexemple de taille 8x8 pixels ;
   ∘ U le vecteur du sous-bloc (-1, x+y+1) ;
   ∘ W le vecteur du sous-bloc (x+y+1,-1) ;
▪ sinon on prend le vecteur R du sous-bloc (x-l,y) si x>0, et le vecteur S du sous-bloc (x, y-1) sinon.

Par exemple, en référence avec la figure 2F, le vecteur V de prédiction de mouvement du sous-bloc (0,1) référencé 2001 est obtenu tel que :
x=0 et y=1 et vérifient x+y<X (1<8), ainsi V=(2*U+W)/3 avec U le vecteur du sous-bloc (-1,2) référencé 221 et W le vecteur du sous-bloc (2,-1) référencé 219.

En relation avec la figure 2G, on décrit ci-après un cinquième nouveau mode, dit « left récursif mode», de prédiction de mouvement. Ce mode « left récursif mode», associe à un sous-bloc dudit bloc de taille élargie, un vecteur de prédiction de mouvement correspondant au vecteur mouvement utilisé pour le sous-bloc déjà codé, situé directement à gauche sur la même ligne que le sous-bloc considéré.

Ainsi, en relation avec la figure 2G, le vecteur de prédiction de mouvement du sous-blocs (0,0) référencé 223 sur la figure 2G correspond au vecteur mouvement du sous-bloc (-1,0) référencé 222. On constate que l'on obtient ici le même résultat pour le sous-bloc (0,0) qu'avec le mode de prédiction de mouvement « left mode ». La différence entre le mode de prédiction de mouvement « left mode » et le mode de prédiction de mouvement « left récursif mode», apparaît lorsque l'on passe au sous-bloc (1,0) référencé 224. En effet, le vecteur de prédiction de mouvement du sous-bloc (1,0) correspond au vecteur mouvement du sous-bloc (0,0) précédemment codé, en considérant que le vecteur mouvement du sous-bloc (0,0) correspond au vecteur de prédiction de mouvement du sous-bloc (0,0) additionné du résidu de prédiction. En d'autre termes, le vecteur de prédiction de mouvement du sous-bloc (0,0) diffère du vecteur de prédiction de mouvement du sous-bloc (1,0) par le résidu associé au sous-bloc (0,0).

Ainsi si l'on considère la première ligne du bloc de taille élargie 200 comprenant les sous-blocs (0,0), (1,0), (2,0) et (3,0), respectivement référencés 223, 224, 225 et 226, les vecteurs de prédiction de mouvement diffèrent d'un sous-bloc à l'autre de la ligne (à l'exception du cas où le résidu de prédiction est nul), contrairement à ce qui est appliqué par le mode de prédiction de mouvement « left mode » qui applique le même vecteur de prédiction de mouvement à l'ensemble des sous-blocs d'une même ligne de bloc de taille élargie.

Des variantes de ces modes de réalisation, non représentées, peuvent également utiliser d'autres modes de prédiction de mouvement. En effet, de façon générale, l'invention peut mettre en compétition tout mode de prédiction de mouvement associant à un sous-bloc du bloc de taille élargie, un vecteur de prédiction de mouvement correspondant au vecteur mouvement ou à une combinaison de vecteurs mouvement utilisés pour :
- au moins un sous-bloc déjà codé, situé en dehors du bloc de taille élargie,
- au moins un sous-bloc déjà codé, situé dans le bloc de taille élargie,
- au moins un sous-bloc déjà codé dans une couche de description d'un niveau inférieure (ou « grossière ») à la couche de réhaussement courante (en cours de codage) dans le cas particulier d'un codeur d'images échelonnables (ou « scalables » selon la norme H.264 SVC par exemple), présentant une structure hiérarchique en couches.
- etc.

### 5.3 Description de modes de réalisation du procédé de décodage

Le principe de l'invention repose sur la mise en oeuvre, au codage et au décodage, d'une même méthode de prédiction d'un vecteur mouvement pour un bloc considéré.

On décrit donc maintenant les principales étapes du procédé de décodage selon l'invention, en relation avec la figure 3, pour un signal comprenant des informations d'identification du mode de prédiction de mouvement sélectionné pour au moins un bloc de taille élargie selon un mode de réalisation du procédé de codage de l'invention tel que précédemment décrit.

Comme illustré en figure 3, le procédé de décodage selon l'invention met en oeuvre une première étape 301 de regroupements de sous-blocs en bloc de taille élargie mise en oeuvre selon une technique connue (décrite par exemple dans le document « Video coding Using Extended Block Sizes », ITU-T COM16-C123, Janvier 2009 de P. Chen, Y. Ye et M. Karczewicz, déjà mentionné en relation avec l'art antérieur).

Selon le mode de réalisation représenté, une fois le regroupement 301 en blocs de taille élargie effectué, le procédé de décodage extrait 302 du signal d'images, pour chaque bloc de taille élargie, une information d'identification du mode de prédiction de mouvement sélectionné au codage.

Puis, à partir de cette information, le décodeur effectue une étape de prédiction 303 mettant en oeuvre pour chaque bloc de taille élargie, le mode de prédiction de mouvement sélectionné parmi l'ensemble E (3001), identique à l'ensemble E (1001) utilise au codage. Au moins un de ces modes utilise donc au moins deux vecteurs de prédiction de mouvement distincts.

### 5.4 Structure des dispositifs de codage et de décodage

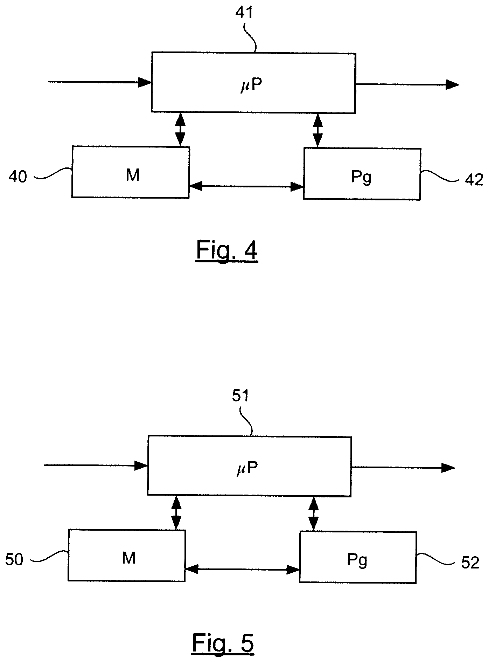

On présente finalement, en relation avec les figures 4 et 5, la structure simplifiée d'un dispositif de codage et d'un dispositif de décodage selon les modes de réalisation décrits ci-dessus.

Comme illustré en figure 4, un tel dispositif de codage comprend une mémoire 40 comprenant une mémoire tampon, une unité de traitement 41, équipée par exemple d'un microprocesseur *µ*P, et pilotée par le programme d'ordinateur 42, mettant en oeuvre le procédé de codage selon l'invention.

A l'initialisation, les instructions de code du programme d'ordinateur 42 sont par exemple chargées dans une mémoire RAM avant d'être exécutées par le processeur de l'unité de traitement 41. L'unité de traitement 41 reçoit en entrée un signal d'images, les images étant découpées en sous-blocs de pixels, regroupés en au moins un bloc de taille élargie. Le microprocesseur de l'unité de traitement 41 met en oeuvre les étapes du procédé de codage décrit précédemment, selon les instructions du programme d'ordinateur 42, pour sélectionner un mode de prédiction de mouvement et associer les vecteurs prédiction de mouvement à des sous-ensembles du bloc de taille élargie. Pour cela, le dispositif de codage comprend, outre la mémoire tampon 40, des moyens de regroupement de sous-blocs en au moins un bloc de taille élargie, des moyens de prédiction appliquant au moins un mode de prédiction de mouvement utilisant au moins deux vecteurs de prédiction de mouvement distincts. Ces moyens sont pilotés par le microprocesseur de l'unité de traitement 41. L'unité de traitement 41 transmet donc, à destination d'au moins un dispositif de décodage, un signal comprenant au moins une information de désignation du vecteur mouvement sélectionné.

Comme illustré en figure 5, un tel dispositif de décodage comprend quant à lui une mémoire 50 comprenant une mémoire tampon, une unité de traitement 51, équipée par exemple d'un microprocesseur *µ*P, et pilotée par le programme d'ordinateur 52, mettant en oeuvre le procédé de décodage selon l'invention.

A l'initialisation, les instructions de code du programme d'ordinateur 52 sont par exemple chargées dans une mémoire RAM avant d'être exécutées par le processeur de l'unité de traitement 51. L'unité de traitement 51 reçoit en entrée un signal d'images comprenant notamment une information d'identification du mode de prédiction de mouvement sélectionné au codage. Le microprocesseur de l'unité de traitement 51 met en oeuvre les étapes du procédé de décodage décrit précédemment, selon les instructions du programme d'ordinateur 52, pour décoder les sous-blocs codés. Pour cela, le dispositif de décodage comprend, outre la mémoire tampon 50, des moyens de regroupement de sous-blocs en au moins un bloc de taille élargie, des moyens de prédiction appliquant au moins un mode de prédiction de mouvement utilisant au moins deux vecteurs de prédiction de mouvement distincts. Ces moyens sont pilotés par le microprocesseur de l'unité de traitement 51.

## Revendications

1. Procédé de codage d'un signal d'images, lesdites images étant découpées en sous-blocs de pixels, comprenant une étape de regroupement (101) d'au moins trois sous-blocs en au moins un bloc de taille élargie, lorsque lesdits sous-blocs respectent au moins un critère de regroupement basé sur une similitude entre au moins deux sous-blocs distincts,
**caractérisé en ce qu'**il met en oeuvre pour au moins un bloc de taille élargie, une étape de prédiction (103) appliquant un même mode de prédiction de mouvement à des sous-ensembles de sous-blocs du bloc de taille élargie,
au moins un desdits sous-ensembles comprenant au moins deux desdits sous-blocs dudit bloc de taille élargie, lesdits sous-ensembles étant prédéfinis et distincts,
ledit mode de prédiction de mouvement associant aux sous-blocs d'un sous-ensemble au moins un vecteur de prédiction de mouvement, au moins deux vecteurs de prédiction de mouvement associés respectivement à deux sous-blocs de deux sous-ensembles distincts étant distincts.

2. Procédé de codage selon la revendication 1, **caractérisé en ce que** ladite étape de prédiction (103) met en oeuvre, pour au moins un bloc de taille élargie, une mise en compétition (102) d'au moins deux modes de prédiction de mouvement, sélectionnant un desdits modes de prédiction de mouvement, dit mode de prédiction de mouvement sélectionné (MPs 1001), selon un critère de sélection prédéterminé.

3. Procédé de codage selon la revendication 2, **caractérisé en ce que** ladite mise en compétition est appliquée à un ensemble (E) de modes de prédiction de mouvement disponibles, et sélectionne, comme mode de prédiction de mouvement sélectionné (MPs 1001), le meilleur desdits modes de prédiction de mouvement selon ledit critère de sélection.

4. Procédé de codage selon la revendication 2, caractérisé en qu'il met en oeuvre, pour au moins un bloc de taille élargie, une étape d'insertion (106), dans ledit signal d'images, d'une information d'identification (Iid 1003) dudit mode de prédiction de mouvement sélectionné (MPs 1001).

5. Procédé de codage selon la revendication 1, **caractérisé en ce que** ledit mode de prédiction de mouvement appartient au groupe comprenant les modes de prédiction suivants :
- un mode dit « left mode », associant à un sous-bloc dudit bloc de taille élargie, un vecteur de prédiction de mouvement correspondant au vecteur mouvement utilisé pour le sous-bloc situé en dehors à gauche du bloc de taille élargie et sur la même ligne que ledit sous-bloc considéré ;
- un mode dit « top mode », associant à un sous-bloc dudit bloc de taille élargie, un vecteur de prédiction de mouvement correspondant au vecteur mouvement utilisé pour le sous-bloc situé en dehors au-dessus du bloc de taille élargie et sur la même colonne que ledit sous-bloc considéré ;
- un mode dit « diag mode », associant à un sous-bloc dudit bloc de taille élargie, un vecteur de prédiction de mouvement correspondant au vecteur mouvement utilisé pour le sous-bloc situé sur la même diagonale que ledit sous-bloc considéré et en dehors, au-dessus et à gauche du bloc de taille élargie ;
- un mode dit « left récursif mode », associant à un sous-bloc dudit bloc de taille élargie, un vecteur de prédiction de mouvement correspondant au vecteur mouvement utilisé pour le sous-bloc déjà codé, situé directement à gauche sur la même ligne que ledit sous-bloc considéré ;
- un mode dit «diag mode pondéré », associant à un sous-bloc dudit bloc de taille élargie, un vecteur de prédiction de mouvement correspondant à un vecteur mouvement résultant d'une pondération effectuée entre le vecteur mouvement utilisé pour le sous-bloc situé sur la même diagonale que ledit sous-bloc considéré et en dehors, au-dessous et à gauche du bloc de taille élargie, et le vecteur mouvement utilisé pour le sous-bloc situé sur la même diagonale que ledit sous-bloc considéré et en dehors, au-dessus et à droite du bloc de taille élargie ;
- une combinaison d'au moins deux des modes de prédiction précédemment listés.

6. Procédé de codage selon la revendication 5, **caractérisé en ce que** ledit mode de prédiction de mouvement appartient au groupe comprenant également au moins un des modes de prédiction suivants :
- un mode dit « DC left », associant à tous les sous-blocs dudit bloc de taille élargie, le vecteur de prédiction de mouvement représentatif d'au moins un vecteur mouvement utilisé pour au moins un sous-bloc situé directement à gauche en dehors du bloc de taille élargie ;
- un mode dit « DC top », associant à tous les sous-blocs dudit bloc de taille élargie, le vecteur de prédiction de mouvement représentatif d'au moins un vecteur mouvement utilisé pour au moins un sous-bloc situé directement au-dessus en dehors du bloc de taille élargie.

7. Procédé de codage selon la revendication 6, **caractérisé en ce que** l'on associe à tous les sous-blocs du bloc de taille élargie :
- le vecteur de prédiction de mouvement correspondant au vecteur mouvement utilisé pour le premier sous-bloc en dehors du bloc de taille élargie directement situé à gauche du premier sous-bloc du bloc de taille élargie, pour un mode dit « DC left », ou
- le vecteur de prédiction de mouvement correspondant au vecteur mouvement utilisé pour le premier sous-bloc en dehors du bloc de taille élargie directement situé au-dessus du premier sous-bloc du bloc de taille élargie, pour un mode dit « DC top ».

8. Procédé de codage selon la revendication 6, **caractérisé en ce que** l'on associe à tous les sous-blocs du bloc de taille élargie :
- une combinaison des vecteurs de prédiction de mouvement correspondants aux vecteurs mouvement utilisés pour la colonne de sous-blocs en dehors du bloc de taille élargie directement située à gauche du bloc de taille élargie, pour un mode dit « DC left », ou
- une combinaison des vecteurs de prédiction de mouvement correspondants aux vecteurs mouvement utilisés pour la ligne de sous-blocs en dehors du bloc de taille élargie directement située au-dessus du bloc de taille élargie, pour un mode dit « DC top ».

9. Procédé de codage selon la revendication 1, **caractérisé en ce qu'**il comprend une étape de détermination d'une différence, dite résidu, entre un vecteur mouvement d'au moins un desdits sous-blocs et un vecteur de prédiction de mouvement qui lui est associé.

10. Procédé de codage selon la revendication 9, **caractérisé en ce qu'**il met en oeuvre une technique de regroupement (104) de codage des résidus de vecteurs mouvement des sous-blocs dudit bloc de taille élargie et **en ce qu'**il met en oeuvre une signalisation appartenant au groupe comprenant les signalisations de type:
- « arbre de zéros » correspondant à un arbre de regroupement hiérarchique dans lequel la valeur de chaque branche représentant les résidus est proche de zéro ;
- « par plage » consistant à coder des séries de résidus consécutifs de même valeur.

11. Programme d'ordinateur comportant des instructions pour la mise en oeuvre du procédé de codage selon l'une quelconque des revendications 1 à 10, lorsque ledit programme est exécuté par un processeur.

12. Dispositif de codage d'un signal d'images, lesdites images étant découpées en sous-blocs de pixels, comprenant des moyens de regroupement d'au moins trois sous-blocs en au moins un bloc de taille élargie, lorsque lesdits sous-blocs respectent au moins un critère de regroupement basé sur une similitude entre au moins deux sous-blocs distincts,
**caractérisé en ce qu'**il comprend des moyens de prédiction appliquant pour au moins un bloc de taille élargie,
un même mode de prédiction de mouvement à des sous-ensembles de sous-blocs du bloc de taille élargie,
au moins un desdits sous-ensembles comprenant au moins deux desdits sous-blocs dudit bloc de taille élargie, lesdits sous-ensembles étant prédéfinis et distincts,
ledit mode de prédiction de mouvement associant aux sous-blocs d'un sous-ensemble au moins un vecteur de prédiction de mouvement, au moins deux vecteurs de prédiction de mouvement associés respectivement à deux sous-blocs de deux sous-ensembles distincts étant distincts.

13. Procédé de décodage d'un signal d'images, lesdites images étant découpées en sous-blocs de pixels, comprenant une étape de regroupement (301) d'au moins trois sous-blocs en au moins un bloc de taille élargie, lorsque lesdits sous-blocs respectent au moins un critère de regroupement basé sur une similitude entre au moins deux sous-blocs distincts,
**caractérisé en ce qu'**il met en oeuvre pour au moins un bloc de taille élargie, une étape de prédiction (303) appliquant un même mode de prédiction de mouvement à des sous-ensembles de sous-blocs du bloc de taille élargie,
au moins un desdits sous-ensembles comprenant au moins deux desdits sous-blocs dudit bloc de taille élargie, lesdits sous-ensembles étant prédéfinis et distincts,
ledit mode de prédiction de mouvement associant aux sous-blocs d'un sous-ensemble au moins un vecteur de prédiction de mouvement, au moins deux vecteurs de prédiction de mouvement associés respectivement à deux sous-blocs de deux sous-ensembles distincts étant distincts.

14. Procédé de décodage selon la revendication 13, **caractérisé en ce que** ladite étape de prédiction met en oeuvre une étape de décodage (302) d'une information d'identification dudit mode de prédiction de mouvement sélectionné, insérée par le codage dans ledit signal d'images.

15. Programme d'ordinateur comportant des instructions pour la mise en oeuvre du procédé de décodage selon l'une quelconque des revendications 13 et 14, lorsque ledit programme est exécuté par un processeur.

16. Dispositif de décodage d'un signal d'images, lesdites images étant découpées en sous-blocs de pixels, comprenant des moyens de regroupement d'au moins trois sous-blocs en au moins un bloc de taille élargie, lorsque lesdits sous-blocs respectent au moins un critère de regroupement basé sur une similitude entre au moins deux sous-blocs distincts,
**caractérisé en ce qu'**il comprend des moyens de prédiction appliquant pour au moins un bloc de taille élargie, un mode même de prédiction de mouvement à des sous-ensembles de sous-blocs du bloc de taille élargie,
au moins un desdits sous-ensembles comprenant au moins deux desdits sous-blocs dudit bloc de taille élargie, lesdits sous-ensembles étant prédéfinis et distincts,
ledit mode de prédiction de mouvement associant aux sous-blocs d'un sous-ensemble au moins un vecteur de prédiction de mouvement, au moins deux vecteurs de prédiction de mouvement associés respectivement à deux sous-blocs de deux sous-ensembles distincts étant distincts.

## Patentansprüche

1. Verfahren zur Kodierung eines Bildsignals, wobei die Bilder in Unterblöcke von Pixeln unterteilt sind, umfassend einen Schritt des Gruppierens (101) von mindestens drei Unterblöcken in mindestens einen erweiterten Block, wenn die Unterblöcke mindestens ein Gruppierungskriterium erfüllen, das auf einer Ähnlichkeit zwischen mindestens zwei verschiedenen Unterblöcken basiert,
**dadurch gekennzeichnet, dass** es für mindestens einen erweiterten Block einen Vorhersageschritt (103) durchführt, der einen gleichen Bewegungsvorhersagemodus auf Teilmengen von Unterblöcken des erweiterten Blocks anwendet,
mindestens eine der Teilmengen mindestens zwei der Unterblöcke des erweiterten Blocks umfasst, wobei die Teilmengen vordefiniert und verschieden sind,
wobei der Bewegungsvorhersagemodus den Unterblöcken einer Teilmenge mindestens einen Bewegungsvorhersagevektor zuordnet, wobei mindestens zwei Bewegungsvorhersagevektoren, die jeweils zwei Unterblöcken von zwei verschiedenen Teilmengen zugeordnet sind, unterschiedlich sind.

2. Kodierverfahren gemäß Anspruch 1, **dadurch gekennzeichnet, dass** der Vorhersageschritt (103) für mindestens einen erweiterten Block ein Auswahlverfahren (102) zwischen mindestens zwei Bewegungsvorhersagemodi durchführt, wobei einer der Bewegungsvorhersagemodi, der so genannte ausgewählte Bewegungsvorhersagemodus (MPs 1001), gemäß einem vorbestimmten Auswahlkriterium ausgewählt wird.

3. Kodierverfahren gemäß Anspruch 2, **dadurch gekennzeichnet, dass** das Auswahlverfahren auf einen Satz (E) von verfügbaren Bewegungsvorhersagemodi angewendet wird und als ausgewählter Bewegungsvorhersagemodus (MPs 1001) den besten der Bewegungsvorhersagemodi gemäß dem Auswahlkriterium auswählt.

4. Kodierverfahren gemäß Anspruch 2, **dadurch gekennzeichnet, dass** es für mindestens einen erweiterten Block einen Schritt des Einfügens (106) einer Identifikationsinformation (Iid 1003) des ausgewählten Bewegungsvorhersagemodus (MPs 1001) in das Bildsignal durchführt.

5. Kodierverfahren gemäß Anspruch 1, **dadurch gekennzeichnet, dass** der Bewegungsvorhersagemodus zu der Gruppe gehört, die die folgenden Vorhersagemodi umfasst:
- einen so genannten "left mode"-Modus, der einem Unterblock des erweiterten Blocks einen Bewegungsvorhersagevektor zuordnet, der dem Bewegungsvektor entspricht, der für den Unterblock verwendet wird, der sich links außerhalb des erweiterten Blocks und auf derselben Zeile wie dieser betreffende Unterblock befindet;
- einen so genannten "top mode"-Modus, der einem Unterblock des erweiterten Blocks einen Bewegungsvorhersagevektor zuordnet, der dem Bewegungsvektor entspricht, der für den Unterblock verwendet wird, der sich oben außerhalb des erweiterten Blocks und auf derselben Spalte wie dieser betreffende Unterblock befindet;
- einen so genannten "diag mode"-Modus, der einem Unterblock des erweiterten Blocks einen Bewegungsvorhersagevektor zuordnet, der dem Bewegungsvektor entspricht, der für den Unterblock verwendet wird, der sich auf derselben Diagonale wie dieser betreffende Unterblock und links oben außerhalb des erweiterten Blocks befindet;
- einen so genannten "left récursif mode"-Modus, der einem Unterblock des erweiterten Blocks einen Bewegungsvorhersagevektor zuordnet, der dem Bewegungsvektor entspricht, der für den bereits kodierten Unterblock verwendet wird, der sich auf derselben Zeile wie dieser betreffende Unterblock direkt links davon befindet;
- einen so genannten "gewichteten diag mode"-Modus, der einem Unterblock des erweiterten Blocks einen Bewegungsvorhersagevektor zuordnet, der einem Bewegungsvektor entspricht, der sich aus einer Gewichtung ergibt, die zwischen dem Bewegungsvektor, der für den Unterblock verwendet wird, der sich auf derselben Diagonale wie dieser betreffende Unterblock und links unten außerhalb des erweiterten Blocks befindet, und dem Bewegungsvektor, der für den Unterblock verwendet wird, der sich auf derselben Diagonale wie dieser betreffende Unterblock und rechts oben außerhalb des erweiterten Blocks befindet, durchgeführt wird;
- eine Kombination von mindestens zwei der zuvor aufgeführten Vorhersagemodi.

6. Kodierverfahren gemäß Anspruch 5, **dadurch gekennzeichnet, dass** der Bewegungsvorhersagemodus zu der Gruppe gehört, die weiterhin mindestens einen der folgenden Vorhersagemodi umfasst:
- einen so genannten "DC left"-Modus, der allen Unterblöcken des erweiterten Blocks den Bewegungsvorhersagevektor zuordnet, der repräsentativ für mindestens einen Bewegungsvektor ist, der für mindestens einen Unterblock verwendet wird, der sich außerhalb des erweiterten Blocks direkt links davon befindet;
- einen so genannten "DC top"-Modus, der allen Unterblöcken des erweiterten Blocks einen Bewegungsvorhersagevektor zuordnet, der repräsentativ für mindestens einen Bewegungsvektor ist, der für mindestens einen Unterblock verwendet wird, der sich außerhalb des erweiterten Blocks direkt über diesem befindet;

7. Kodierverfahren gemäß Anspruch 6, **dadurch gekennzeichnet, dass** allen Unterblöcken des erweiterten Blocks zugeordnet ist:
- der Bewegungsvorhersagevektor, der dem Bewegungsvektor entspricht, der für den ersten Unterblock außerhalb des erweiterten Blocks direkt links vom ersten Unterblock des erweiterten Blocks verwendet wird, für einen so genannten "DC left"-Modus, oder
- der Bewegungsvorhersagevektor, der dem Bewegungsvektor entspricht, der für den ersten Unterblock außerhalb des erweiterten Blocks direkt über dem ersten Unterblock des erweiterten Blocks verwendet wird, für einen so genannten "DC top"-Modus.

8. Kodierverfahren gemäß Anspruch 6, **dadurch gekennzeichnet, dass** allen Unterblöcken des erweiterten Blocks zugeordnet ist:
- eine Kombination der Bewegungsvorhersagevektoren, die den Bewegungsvektoren entsprechen, die für die Spalte der Unterblöcke außerhalb des erweiterten Blocks direkt links von dem erweiterten Block verwendet werden, für einen so genannten "DC left"-Modus, oder
- eine Kombination der Bewegungsvorhersagevektoren, die den Bewegungsvektoren entsprechen, die für die Zeile der Unterblöcke außerhalb des erweiterten Blocks direkt über dem erweiterten Block verwendet werden, für einen so genannten "DC top"-Modus.

9. Kodierverfahren gemäß Anspruch 1, **dadurch gekennzeichnet, dass** es einen Schritt zur Bestimmung einer Differenz, so genannter Rest, zwischen einem Bewegungsvektor von mindestens einem der Unterblöcke und einem diesem zugeordneten Bewegungsvorhersagevektor umfasst.

10. Kodierverfahren gemäß Anspruch 9, **dadurch gekennzeichnet, dass** es eine Gruppierungstechnik (104) zur Kodierung der Bewegungsvektorreste der Unterblöcke des erweiterten Blocks umsetzt und dass es eine Signalisierung umsetzt, die zu der Gruppe gehört, die folgende Signalisierungstypen umfasst:
- "Nullbaum", der einem hierarchischen Gruppierungsbaum entspricht, in dem der Wert jedes die Reste repräsentierenden Zweiges nahe Null ist;
- "durch Lauflänge", wobei aufeinander folgende Serien von Resten desselben Wertes kodiert werden.

11. Computerprogramm mit Anweisungen zum Durchführen des Kodierverfahrens gemäß einem der Ansprüche 1 bis 10, wenn das Programm von einem Prozessor ausgeführt wird.

12. Vorrichtung zur Kodierung eines Bildsignals, wobei die Bilder in Unterblöcke von Pixeln unterteilt sind, umfassend Mittel zum Gruppieren von mindestens drei Unterblöcken in mindestens einen erweiterten Block, wenn die Unterblöcke mindestens ein Gruppierungskriterium erfüllen, das auf einer Ähnlichkeit zwischen mindestens zwei verschiedenen Unterblöcken basiert,
**dadurch gekennzeichnet, dass** sie Vorhersagemittel umfasst, die für mindestens einen erweiterten Block einen gleichen Bewegungsvorhersagemodus auf Teilmengen von Unterblöcken des erweiterten Blocks anwenden,
mindestens eine der Teilmengen mindestens zwei der Unterblöcke des erweiterten Blocks umfasst, wobei die Teilmengen vordefiniert und verschieden sind,
wobei der Bewegungsvorhersagemodus mindestens einen Bewegungsvorhersagevektor den Unterblöcken einer Teilmenge zuordnet, wobei mindestens zwei Bewegungsvorhersagevektoren, die jeweils zwei Unterblöcken von zwei verschiedenen Teilmengen zugeordnet sind, unterschiedlich sind.

13. Verfahren zur Dekodierung eines Bildsignals, wobei die Bilder in Unterblöcke von Pixeln unterteilt sind, umfassend einen Schritt des Gruppierens (301) von mindestens drei Unterblöcken in mindestens einen erweiterten Block, wenn die Unterblöcke mindestens ein Gruppierungskriterium erfüllen, das auf einer Ähnlichkeit zwischen mindestens zwei verschiedenen Unterblöcken basiert,
**dadurch gekennzeichnet, dass** es für mindestens einen erweiterten Block einen Vorhersageschritt (303) durchführt, der einen gleichen Bewegungsvorhersagemodus auf Teilmengen von Unterblöcken des erweiterten Blocks anwendet,
mindestens eine der Teilmengen mindestens zwei der Unterblöcke des erweiterten Blocks umfasst, wobei die Teilmengen vordefiniert und verschieden sind,
wobei der Bewegungsvorhersagemodus den Unterblöcken einer Teilmenge mindestens einen Bewegungsvorhersagevektor zuordnet, wobei mindestens zwei Bewegungsvorhersagevektoren, die jeweils zwei Unterblöcken von zwei verschiedenen Teilmengen zugeordnet sind, unterschiedlich sind.

14. Dekodierverfahren nach Anspruch 13, **dadurch gekennzeichnet, dass** der Vorhersageschritt einen Schritt des Dekodierens (302) einer Identifikationsinformation des ausgewählten Bewegungsvorhersagemodus umsetzt, die durch die Kodierung in das Bildsignal eingefügt wird.

15. Computerprogramm mit Anweisungen zum Durchführen des Dekodierverfahrens gemäß einem der Ansprüche 13 und 14, wenn das Programm von einem Prozessor ausgeführt wird.

16. Vorrichtung zur Dekodierung eines Bildsignals, wobei die Bilder in Unterblöcke von Pixeln unterteilt sind, umfassend Mittel zum Gruppieren von mindestens drei Unterblöcken in mindestens einen erweiterten Block, wenn die Unterblöcke mindestens ein Gruppierungskriterium erfüllen, das auf einer Ähnlichkeit zwischen mindestens zwei verschiedenen Unterblöcken basiert,
**dadurch gekennzeichnet, dass** sie Vorhersagemittel umfasst, die für mindestens einen erweiterten Block einen gleichen Bewegungsvorhersagemodus auf Teilmengen von Unterblöcken des erweiterten Blocks anwenden, mindestens eine der Teilmengen mindestens zwei der Unterblöcke des erweiterten Blocks umfasst, wobei die Teilmengen vordefiniert und verschieden sind,
wobei der Bewegungsvorhersagemodus den Unterblöcken einer Teilmenge mindestens einen Bewegungsvorhersagevektor zuordnet, wobei mindestens zwei Bewegungsvorhersagevektoren, die jeweils zwei Unterblöcken von zwei verschiedenen Teilmengen zugeordnet sind, unterschiedlich sind.

## Claims

1. Method for coding an image signal, said images being divided into pixel sub-blocks, comprising a step (101) of grouping at least three sub-blocks into at least one block of increased size, when said sub-blocks comply with at least one grouping criterion based on a similarity between at least two separate sub-blocks, **characterized in that** it implements, for at least one block of increased size, a prediction step (103) applying one and the same motion prediction mode to subsets of sub-blocks of the block of increased size,
at least one of said subsets comprising at least two of said sub-blocks of said block of increased size, said subsets being predefined and separate,
said motion prediction mode associating, with the sub-blocks of a subset, at least one motion prediction vector, at least two motion prediction vectors associated respectively with two sub-blocks of two separate subsets being separate.

2. Coding method according to Claim 1, **characterized in that** said prediction step (103), for at least one block of increased size, puts at least two motion prediction modes into competition (102), selecting one of said motion prediction modes, termed selected motion prediction mode (MPs 1001), according to a predetermined selection criterion.

3. Coding method according to Claim 2, **characterized in that** said putting into competition is applied to a set (E) of available motion prediction modes, and selects, as selected motion prediction mode (MPs 1001), the best one of said motion prediction modes according to said selection criterion.

4. Coding method according to Claim 2, **characterized in that** it implements, for at least one block of increased size, a step (106) of inserting, into said image signal, an item of information on the identity (Iid 1003) of said selected motion prediction mode (MPs 1001) .

5. Coding method according to Claim 1, **characterized in that** said motion prediction mode belongs to the group comprising the following prediction modes:
- a mode called 'left mode', associating, with a sub-block of said block of increased size, a motion prediction vector corresponding to the motion vector used for the sub-block situated outside of and to the left of the block of increased size and on the same row as said sub-block under consideration;
- a mode called 'top mode', associating, with a sub-block of said block of increased size, a motion prediction vector corresponding to the motion vector used for the sub-block situated outside of and above the block of increased size and on the same column as said sub-block under consideration;
- a mode called 'diag mode', associating, with a sub-block of said block of increased size, a motion prediction vector corresponding to the motion vector used for the sub-block situated on the same diagonal as said sub-block under consideration, and outside of, above and to the left of the block of increased size;
- a mode called 'left recursive mode', associating, with a sub-block of said block of increased size, a motion prediction vector corresponding to the motion vector used for the already coded sub-block, situated directly to the left on the same row as said sub-block under consideration;
- a mode called 'weighted diag mode', associating, with a sub-block of said block of increased size, a motion prediction vector corresponding to a motion vector resulting from a weighting carried out between the motion vector used for the sub-block situated on the same diagonal as said sub-block under consideration and outside of, below and to the left of the block of increased size, and the motion vector used for the sub-block situated on the same diagonal as said sub-block under consideration and outside of, above and to the right of the block of increased size;
- a combination of at least two of the prediction modes listed above.

6. Coding method according to Claim 5, **characterized in that** said motion prediction mode belongs to the group also comprising at least one of the following prediction modes:
- a mode called 'DC left', associating, with all of the sub-blocks of said block of increased size, the motion prediction vector representative of at least one motion vector used for at least one sub-block situated directly to the left and outside of the block of increased size;
- a mode called 'DC top', associating, with all of the sub-blocks of said block of increased size, the motion prediction vector representative of at least one motion vector used for at least one sub-block situated directly above and outside of the block of increased size.

7. Coding method according to Claim 6, **characterized in that** there is associated, with all of the sub-blocks of the block of increased size:
- the motion prediction vector corresponding to the motion vector used for the first sub-block outside of the block of increased size and situated directly to the left of the first sub-block of the block of increased size, for a mode called 'DC left', or
- the motion prediction vector corresponding to the motion vector used for the first sub-block outside of the block of increased size and situated directly above the first sub-block of the block of increased size, for a mode called 'DC top' .

8. Coding method according to Claim 6, **characterized in that** there is associated, with all of the sub-blocks of the block of increased size:
- a combination of the motion prediction vectors corresponding to the motion vectors used for the column of sub-blocks outside of the block of increased size and situated directly to the left of the block of increased size, for a mode called 'DC left', or
- a combination of the motion prediction vectors corresponding to the motion vectors used for the row of sub-blocks outside of the block of increased size and situated directly above the block of increased size, for a mode called 'DC top'.

9. Coding method according to Claim 1, **characterized in that** it comprises a step of determining a difference, termed residue, between a motion vector of at least one of said sub-blocks and a motion prediction vector associated with said motion vector.

10. Coding method according to Claim 9, **characterized in that** it implements a grouping technique (104) for coding the motion vector residues of the sub-blocks of said block of increased size, and **in that** it implements signalling belonging to the group comprising the following types of signalling:
- 'zero tree', corresponding to a hierarchical grouping tree in which the value of each branch representing the residues is close to zero;
- 'by range', consisting in coding series of consecutive residues of the same value.

11. Computer program including instructions for implementing the coding method according to any one of Claims 1 to 10 when said program is executed by a processor.

12. Device for coding an image signal, said images being divided into pixel sub-blocks, comprising means for grouping at least three sub-blocks into at least one block of increased size, when said sub-blocks comply with at least one grouping criterion based on a similarity between at least two separate sub-blocks, **characterized in that** it comprises prediction means applying, for at least one block of increased size, one and the same motion prediction mode to subsets of sub-blocks of the block of increased size,
at least one of said subsets comprising at least two of said sub-blocks of said block of increased size, said subsets being predefined and separate,
said motion prediction mode associating, with the sub-blocks of a subset, at least one motion prediction vector, at least two motion prediction vectors associated respectively with two sub-blocks of two separate subsets being separate.

13. Method for decoding an image signal, said images being divided into pixel sub-blocks, comprising a step (301) of grouping at least three sub-blocks into at least one block of increased size, when said sub-blocks comply with at least one grouping criterion based on a similarity between at least two separate sub-blocks, **characterized in that** it implements, for at least one block of increased size, a prediction step (303) applying one and the same motion prediction mode to subsets of sub-blocks of the block of increased size,
at least one of said subsets comprising at least two of said sub-blocks of said block of increased size, said subsets being predefined and separate,
said motion prediction mode associating, with the sub-blocks of a subset, at least one motion prediction vector, at least two motion prediction vectors associated respectively with two sub-blocks of two separate subsets being separate.

14. Decoding method according to Claim 13, **characterized in that** said prediction step implements a step (302) of decoding an item of information on the identity of said selected motion prediction mode, which item of information is inserted into said image signal by the coding.

15. Computer program including instructions for implementing the decoding method according to either one of Claims 13 and 14 when said program is executed by a processor.

16. Device for decoding an image signal, said images being divided into pixel sub-blocks, comprising means for grouping at least three sub-blocks into at least one block of increased size, when said sub-blocks comply with at least one grouping criterion based on a similarity between at least two separate sub-blocks, **characterized in that** it comprises prediction means applying, for at least one block of increased size, one and the same motion prediction mode to subsets of sub-blocks of the block of increased size,
at least one of said subsets comprising at least two of said sub-blocks of said block of increased size, said subsets being predefined and separate,
said motion prediction mode associating, with the sub-blocks of a subset, at least one motion prediction vector, at least two motion prediction vectors associated respectively with two sub-blocks of two separate subsets being separate.
